**Europäisches Patentamt**

**European Patent Office**

**Office européen des brevets**

(19)

(11) Veröffentlichungsnummer : **0 101 532**
**B1**

(12) **EUROPÄISCHE PATENTSCHRIFT**

(45) Veröffentlichungstag der Patentschrift :
01.10.86

(21) Anmeldenummer : 83104534.9

(22) Anmeldetag : 09.05.83

(51) Int. Cl.⁴ : **G 01 F   1/24**

(54) Vorrichtung zur Durchflussmessung mit potentialfreiem Endkontaktschalter.

(30) Priorität : 11.08.82 DEU 8222641

(43) Veröffentlichungstag der Anmeldung :
29.02.84 Patentblatt 84/09

(45) Bekanntmachung des Hinweises auf die Patenterteilung : 01.10.86 Patentblatt 86/40

(84) Benannte Vertragsstaaten :
AT BE CH DE FR GB LI NL

(56) Entgegenhaltungen :
EP-A- 0 050 400
DE-A- 2 517 429
DE-A- 2 546 303
E. BARTHOLOME et al. "Ullmanns Encyklopädie der technischen Chemie", 4. Auflage, Band 16, 1978, VERLAG CHEMIE, Weinheim, New York, Seiten 386-395

(73) Patentinhaber : Kobold, Klaus
Sodener Strasse 120
D-6233 Kelkheim (DE)

(72) Erfinder : Kobold, Klaus
Sodener Strasse 120
D-6233 Kelkheim (DE)

(74) Vertreter : Keil, Rainer A., Dipl.-Phys. Dr. et al
Patentanwälte KEIL & SCHAAFHAUSEN Ammelburgstrasse 34
D-6000 Frankfurt am Main 1 (DE)

## Beschreibung

Gegenstand der Erfindung ist eine Vorrichtung zur Durchflußmengenmessung nach dem Schwebekörperprinzip, mit der sehr geringe Mengen an Gasen oder Flüssigkeiten gemessen werden können und die einen Schalter mit einem potentialfreien Endkontakt aufweist.

Durchflußmeßgeräte nach dem Schwebekörperprinzip, bei denen in einem Rohr mit einer Meßstrecke ein Meßkörper mit einem axial magnetisierten Magneten angeordnet ist und die außerhalb des Meßrohres einen längsverschiebbaren Schutzgaskontaktschalter enthalten, sind bekannt (vgl. z. B. DE-A-2 546 303 !).

Für kleine Durchflußmengen konnten die Vorrichtungen bisher jedoch nicht hergestellt werden, weil die Miniaturisierung von Schalter und Magneten enthaltenden Schwebekörpern wegen des Fehlens geeigneter Werkstoffe und miniaturisierter Ausführungsformen nicht möglich war. Durch die technische Weiterentwicklung wurden zunächst Subminiaturkontaktschalter (sogenannte Reed-Kontakte) mit niedriger Ansprechempfindlichkeit verfügbar, jedoch stieß die Verkleinerung der Meßvorrichtung mit dem Schwebekörper auf erhebliche Schwierigkeiten, weil entsprechend kleine Magneten mit ausreichender Feldstärke nicht verfügbar waren.

Aufgabe der Erfindung ist es, eine konstruktive Gestaltung eines Strömungsmessers zur Durchflußmessung von sehr geringen Mengen zu schaffen, der einen Schalter mit potentialfreiem Endkontakt aufweist.

Diese Aufgabe wird gelöst durch eine Vorrichtung zur Durchflußmessung von Gasen oder Flüssigkeiten nach dem Schwebekörperprinzip, mit einem in einem engen Meßrohr angeordneten Schwebekörper, der einen axial magnetisierten Magneten enthält und einen seitlich neben dem Meßrohr angeordneten Schutzgaskontaktschalter, die dadurch gekennzeichnet ist, daß das Meßrohr einen Innendurchmesser von 3,0-7 mm aufweist, der Schwebekörper ein Durchmesser-Längen-Verhältnis von 1 : 1 bis 1 : 3 und der in ihm enthaltene Magnet einen Durchmesser von mindestens 1 mm und ein Durchmesser-Längen-Verhältnis von 1 : 1 bis 1 : 2 und der Schutzgaskontaktschalter ein Subminiaturschalter mit einem Glas-Rohrdurchmesser von 1 bis 3,5 mm und einer Ansprechempfindlichkeit von 5 bis 60 AW ist.

In den abhängigen Ansprüchen sind bevorzugte Ausführungsformen der Erfindung beschrieben.

Die Vorrichtung besteht aus einem Meßrohr mit einem Innendurchmesser von 3,0 bis 7 mm, und einem Außendurchmesser von 7 mm bis 16 mm, wobei das Meßrohr an den Enden jeweils mit einer Anschlußmöglichkeit für eine Rohrleitung ausgestattet ist. Im Ausführungsbeispiel beträgt der Innendurchmesser des Meßrohres 6,0 bis 6,5 mm.

Die Meßrohr-Länge beträgt vorzugsweise 150 mm bzw. 100 mm, sie kann auch kürzer oder länger sein, z. B. von 30 mm bis 500 mm und mehr, oder 30 bis 100 mm oder 30 bis 150 mm.

Der in der Meßstrecke innerhalb des Rohres angeordnete Schwebekörper hat ein Durchmesser-Längenverhältnis von 1 : 1 bis 1 : 3, vorzugsweise 1 : 1,5 bis 1 : 3, in dem ein axial magnetisierter Miniaturmagnet enthalten ist. Dieser kann in dem Schwebekörper eingekapselt sein. Es ist auch möglich, den Miniaturmagneten zum Zwecke der Gewichtsverminderung des Schwebekörpers mit einem Kunststoffüberzug aus Polytetrafluorethylen, Polyvinylidenfluorid oder Polyamid in Form einer Beschichtung oder eines Schrumpfschlauchs zu versehen. Im Meßrohr sind an den Enden der Meßstrecke Begrenzungseinrichtungen für den Schwebekörper vorhanden. Das vorzugsweise durchsichtige Rohr erlaubt eine optische Ablesung der Stellung des Schwebekörpers dieser durch das hindurchströmende Medium in dem senkrecht angeordneten Meßinstrument angehoben wird. Der Magnet hat ein Durchmesser-Längenverhältnis von 1 : 1 bis 1 : 2 bei einer Länge von 1 mm bis 8 mm und einem Durchmesser von mindestens 1 mm, vorzugsweise betragen Länge und Durchmesser 1 bis 5 mm. Er besteht vorzugsweise aus einem verformbaren Dauermagnetwerkstoff, beispielsweise gesinterten Werkstoffen auf der Basis von Chrom/Kobalt/Eisen- oder Aluminium/Nickel/Kobalt- oder Kobalt/Samarium $(Co_5Sm)$- oder Kobalt/seltene Erden- oder Platin/Kobalt-enthaltenden Legierungen. Es handelt sich um anisotrope Legierungen mit hoher Remanenz von 0,55 bis 1,05 Tesla. Es können jedoch auch isotrope Legierungen zur Herstellung der Magnete verwendet werden. Die verwendeten Magnete haben ein maximales Energieprodukt $(BxH)_{max}$ von 60 bis 220 kJ/m³. Die Koerzitivfeldstärke der Induktion beträgt etwa 500 bis 800 kA/m, die der Polarisation 1 500 bis 2 500 kA/m.

Beim erfindungsgemäßen Strömungsmesser mit Kontakteinrichtung ist das Meßrohr aus Glas oder entsprechend stabilen, durchsichtigen Kunststoffen hergestellt, das dicht in ein Halterungsgestell eingefügt ist, um den Einbau in Rohrleitungen zu ermöglichen. Wenn die erfindungsgemäße Meßvorrichtung lediglich als Strömungswächter verwendet werden soll, so kann das Rohr, in dem sich der Schwebekörper bewegt, auch aus einem undurchsichtigen antimagnetischen Werkstoff hergestellt sein, beispielsweise Kunststoffen oder antimagnetischen Metallegierungen.

Um durch die kleinen Magnete schaltbar zu sein, ist die Anordnung eines Schutzgaskontaktschalters mit entsprechend niedriger Ansprechempfindlichkeit neben dem Meßrohr erforderlich. Derartige Subminiaturkontaktschalter mit Ansprechempfindlichkeit von 5 bis 120 AW (Ampere-Windungen) bzw. 5-60 AW oder 5-32,5 AW oder 5-20 AW, ganz besonders bevorzugt ist eine Ansprechempfindlichkeit von 7,0 bis 12 AW, weisen in engen Glasröhren eingeschmolzene Kontakte auf, die eine Schaltleistung bis zu 10 Watt bei 220 Volt ermöglichen, beispielsweise eine Schaltleistung von 3 Watt bei 28 Volt Schaltgleichspannung bzw. bei 0,11 A Schaltgleichstrom. Die Glasröhren haben einen Durchmesser von 1 mm bis 3,5 mm und eine Glaskörper-Länge von 15 mm bis 30 mm. Die Schaltzeit incl. Prellzeit beträgt max. 0,5 ms, vorzugsweise 0,3 ms. Das Kontaktmaterial ist Rhodium (Rh), die Resonanzfrequenz beträgt 4 000 Hz.

Der Schutzgaskontakt kann sein

a) ein Schließkontakt, d. h. die Kontakte sind ohne Magnetkraft geöffnet,

b) ein Öffnungskontakt, d. h. die Kontakte sind ohne Magnetkraft geschlossen,

c) ein Wechselkontakt, d. h. ein Kontakt ist ohne Magnetkraft geschlossen, ein zweiter offen, und mit Magnetkraft erfolgt ein Wechsel.

Diese Miniaturkontaktschalter sind im Handel erhältlich und werden für den erfindungsgemäßen Zweck in eine Haltervorrichtung eingebettet. Diese Haltevorrichtung oder dieser Kontaktträger für den Kontaktschalter kann aus einem Vierkantmaterial, das elektrisch nicht leitend ist, gefertigt sein. Da das Material darüber hinaus auch ein geringes Wasser- nzw. Feuchtigkeitsaufnahmeverhalten aufweisen soll, ist Kunststoff der bevorzugte Werkstoff. Besonders geeignet sind Polyvinylchlorid, Polyethylen oder polyfluorierte Materialien wie PVDF.

Der Materialblock zur Aufnahme des Schalters kann ein Würfel oder ein Quader sein mit einer Kantenlänge von etwa 20 bis 30 mm, vorzugsweise ein Quader mit 20 mm Kantenlänge des quadratischen Querschnitts und 25 mm Länge. Der Vierkantblock weist eine vorzugsweise asymmetrisch angeordnete Bohrung auf, deren Innendurchmesser gleich oder geringfügig kleiner als der Außendurchmesser des Meßrohres ist. Das Wandmaterial der asymmetrisch in der Nähe des äußeren Randes angebrachten Bohrung ist zur Ausbildung eines schmalen, etwa 1 bis 5 mm breiten Spaltes an der dünnsten Stelle in Längsrichtung der Bohrung herausgetrennt. Durch die Elastizität der verwendeten Materialien, wie Kunststoffen, ergibt sich für das eingeschobene Meßrohr eine Klammerhalterung, die sich selbständig am Meßrohr durch die elastische Spannung hält und darüber hinaus in Längsrichtung beliebig verschiebbar ist. Es ist somit eine stabile Selbsthaltewirkung gegeben, so daß eine weitere Arretiervorrichtung, wie sie üblich ist, nicht vorgesehen werden muß. Der Halteblock kann bezüglich des Meßrohres längsverschiebbar ausgebildet oder in einer Stellung fest fixiert sein.

Durch die längliche Öffnung in der Wand des Blockes ist gewährleistet, daß die darunter befindliche Meßskala ungehindert ablesbar ist, d. h. es ist ein wesentlicher Vorteil vorhanden im Vergleich zu einem geschlossenen Halter, beispielsweise einem Ring. Darüber hinaus ist der relativ kleine Schwebekörper jederzeit sichtbar.

Um den Schwebekörper besser sichtbar zu machen, ist der Halteblock so ausgebildet, daß er das Meßrohr nur teilweise umfaßt. Dies wird durch entsprechend stark asymmetrische Anordnung der Längsbohrung für das Meßrohr verwirklicht. So kann beispielsweise das Meßrohr bis zur Hälfte oder mehr seines Umfanges bereits außerhalb des Halteblockes liegen. Wegen der entfallenden Selbsthaltewirkung des Blockes bei dieser Gestaltung ist es erforderlich, den Halteblock in geeigneter Weise am Meßrohr zu fixieren, beispielsweise durch Einbringen in ein Gehäuse oder Befestigen mittels Klammern.

Der Öffnung auf der Sichtseite gegenüberliegend, weist der Block in der Bohrungswandung eine durchgehende Längsnut auf mit einer Nutbreite größer oder gleich dem Außendurchmesser des Schutzgaskontaktes. Die Nuttiefe ist derart, daß bei aufgeschobener oder fixierter Halterung der Reed-Kontakt unmittelbar am Meßrohr anliegt, jedoch noch keine Druckspannung im Meßrohr auf das Reed-Kontakt-Glasröhrchen übertragen wird. Zwei horizontale, nach außen führende Bohrungen im Halteblock nehmen die abgewinkelten Kontaktfahnen des Reed-Kontaktes auf, die ihrerseits mit zwei isolierten, geeigneten Kupferdrähten bzw. Litzen verbunden sind, wodurch die elektrische Verbindung an ein nachzuschaltendes Schaltgehäuse erfolgen kann.

Die horizontalen Bohrungen sind vom Durchmesser größer ausgeführt als die Durchmesser der beiden Verbindungsleitungen, damit nach der Montage ein Ausgießen bzw. Ausspritzen mit einem isolierenden Kunstharz oder Silikonmasse erfolgen kann.

Die Haltevorrichtung oder der Halteblock kann auch dadurch gebildet werden, daß der Schutzgaskontaktschalter unter Einhaltung der erforderlichen Außenform in eine Gießharzmasse eingeschlossen wird.

Sobald der innerhalb des Meßrohres angeordnete Schwebekörper mit dem eingelagerten Subminiaturmagnet in den Bereich der Schaltzungen des mit der Halterung außen am Meßrohr anliegenden Subminiatur-Reed-Kontaktes kommt, werden bei Schließkontaktausführung die Schaltzungen infolge des Magnetfeldes geschlossen. Durch Verschieben der Klammer-Haltevorrichtung kann jede beliebige Höhe der Schwebekörperstellung innerhalb der Meßrohrstrecke angezeigt werden. Auf diese Weise ist eine Signalerzeugung gesichert, sobald eine bestimmte Strömungsmenge erreicht ist und eine gegenteilige Signalerzeugung, sobald diese Menge unter- bzw. überschritten wird.

Diese konstruktive Gestaltung ergibt ein monostabiles Schaltverhalten, d. h. nur bei einer bestimmten Stellung des Meßkörpers und des Kontaktes zueinander ist der Kontakt geschlossen und es wird ein Signal durchgelassen bzw. erzeugt.

Für ein bistabiles Schaltverhalten sind zwei, in dem Halteblock angeordnete Miniaturkontakte erforderlich, die in bestimmter Weise in den Schaltkreis für Signalerzeugung angeschlossen werden.

Die im Halter befindlichen Kontakte sind monostabil und schalten impulsartig.

Kontakt 1 (unterer Kontakt) setzt das digitale Schaltglied zurück (löschen).

Kontakt 2 setzt das Schaltglied.

Alternativ kann der Vorgang auch getauscht werden, d. h. Kontakt 1 : setzen, Kontakt 2 : rücksetzen (löschen), je nachdem, ob das nachfolgende, durch verstärkende Elektronik betätigte Relais in Ruhe- oder Arbeitsstromprinzip arbeiten soll.

Ablauf

Die Haltevorrichtung mit zwei in Längsrichtung hintereinander angeordneten Schaltkontakten kann auf jeden Punkt des Anzeigebereiches stufenlos eingestellt werden. Der durch Durchfluß durch das Meßrohr aus seiner Ruhelage angehobene Schwebekörper betätigt magnetisch Kontakt 1 (unterer Kontakt) und löst damit das Zurücksetzen eines digitalen Schaltgliedes aus.

Mit steigender Durchflußmenge bewegt sich der Schwebekörper weiter und schließt Kontakt 2 (oberer Kontakt), wobei Kontakt 1 sich vorher öffnete ; dadurch wird das Setzen des digitalen Schaltgliedes ausgelöst und durch das elektronisch verstärkte Signal ein Relais zum Ansprechen gebracht.

Durch ein entsprechendes Speicherverhalten des digitalen Schaltgliedes bleibt dieses Signal erhalten, auch wenn der Schwebekörper den Kontakt 2 wegen zu großem Abstand des Magneten nicht mehr geschlossen halten kann, da z. B. der Durchfluß weiter gestiegen ist. Erst nachdem der Schwebekörper durch niedrigere Durchflußmengen absinkt und den Kontakt 1 betätigt, wird das digitale Schaltglied zurückgesetzt und das Ausgangsrelais fällt ab.

Der Vorteil der erfindungsgemäßen konstruktiven Gestaltung besteht darin, daß mit ihr außerordentlich geringe Durchflußmengen noch reproduzierbar zu messen sind und ein potentialfreier Kontaktschalter vorhanden ist, der bei einer gewünschten Sollmenge ein Signal auslöst. Durch eine entsprechende Ausgestaltung des Schaltkreises und mit zwei Schutzgaskontakten ist auch ein bistabiles Schaltverhalten erreichbar.

Mögliche Meßbereiche für Durchflußmengen sind beispielsweise :

Wasser oder andere Flüssigkeiten

| l/h |
|---|
| 0,001 – 0,01 |
| 0,01 – 0,1 |
| 0,25 – 2,5 |
| 0,5 – 5 |
| 1,2 – 12 |
| 2,5 – 25 |
| 4 – 40 |
| 6 – 60 |

Luft oder andere Gase ($l_N$ = Liter unter Normalbedingungen)

| $l_N/h$ |
|---|
| 0,1 – 1 |
| 1 – 10 |
| 1,6 – 16 |
| 4 – 40 |
| 6 – 60 |
| 10 – 100 |
| 25 – 250 |
| 50 – 500 |
| 80 – 800 |
| 120 – 1200 |

Die Erfindung wird nun anhand der Figuren noch näher beschrieben :

Figur 1 zeigt schematisch die Ausbildung der Vorrichtung und ihre Anordnung innerhalb eines Schaltkreises.

Figur 2 zeigt einen Querschnitt von oben durch die Haltevorrichtung für den Schutzgaskontakt.

Figur 3 zeigt einen Längsschnitt entlang der Linie IV-IV von Fig. 2 durch die Haltevorrichtung.

Figur 4 zeigt einen Längsschnitt entlang der Linie II-II von Fig. 3 durch die Haltevorrichtung.

Figur 5 zeigt einen Längsschnitt durch die Haltevorrichtung von vorn mit zwei Schutzgaskontakten.

Figur 6 zeigt einen Längsschnitt durch die Haltevorrichtung von der Seite mit zwei Schutzgaskontakten.

Figur 7 zeigt die Ausbildung der Vorrichtung mit monostabilem Schaltverhalten.

Figur 8 zeigt die Ausbildung der Vorrichtung mit bistabilem Schaltverhalten.

Figur 9 zeigt vergrößert einen Längsschnitt durch einen Meßkörper mit eingekapseltem Magneten.

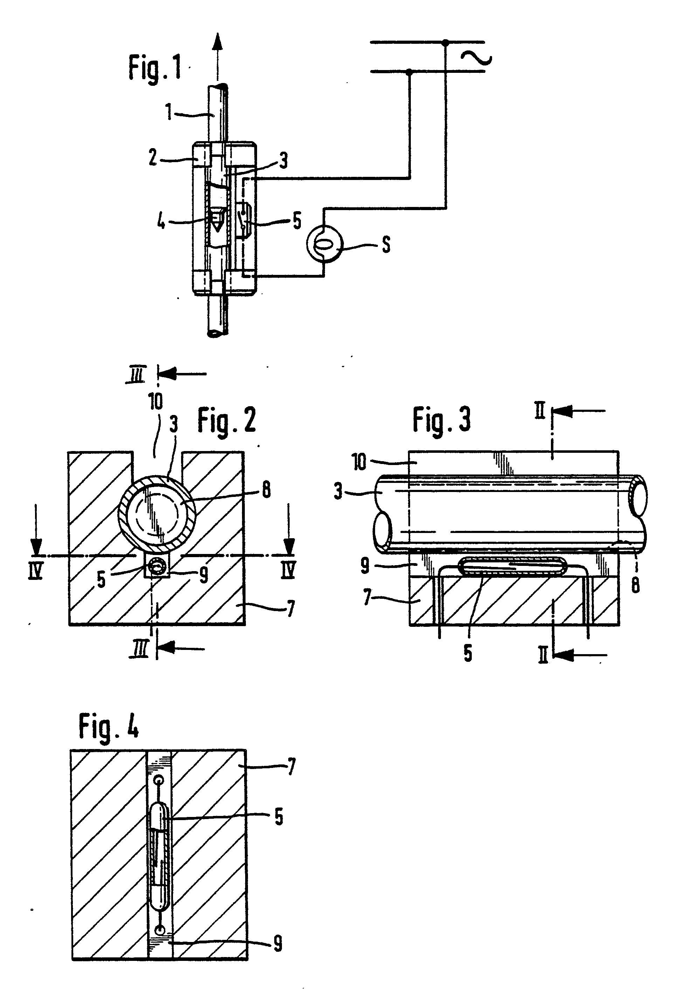

In Figur 1 ist wiedergegeben, wie die erfindungsgemäße Strömungsmeßvorrichtung prinzipiell in eine Rohrleitung 1 in senkrechter Stellung eingebaut ist. Die Vorrichtung besteht aus einem Gehäuse 2 mit darin angeordnetem Meßrohr 3, in dem sich seinerseits wieder der Schwebekörper 4 befindet. In den Schwebekörper 4 ist ein Miniaturmagnet eingeschlossen. Der Miniaturmagnet kann jedoch auch eine der Form des Meßkörpers weitgehend angenäherte Form haben und ist dann mit einer Kunststoffbeschichtung versehen. Durch diese Ausbildung mit direkter Schutzbeschichtung ist eine Verminderung des Gewichts des Schwebekörpers möglich, so daß noch kleinere Durchflußmengen erfaßbar sind. Neben dem Meßrohr ist ein Miniaturschutzgaskontaktschalter 5 längs verschiebbar oder fest fixiert und in der Höhe feststellbar angeordnet. In der Abbildung ist der Kontaktschalter 5 stark vergrößert wiedergegeben, um den Aufbau besser erkennbar zu machen. An die Kontakte des Schutzgaskontaktschalters 5 ist über eine Signaleinrichtung S eine Spannung angelegt. Bei Schließen der Kontakte durch die Magnetkraft liegt die Spannung an der Signaleinrichtung an, die beispielsweise eine Lampe oder ein Relais oder dergleichen sein kann. Der Schutzgaskontaktschalter kann auch direkt an Schaltkreise, beispielsweise eines Analogrechners oder dergl. angeschlossen werden.

Aus Figur 2 sind die asymmetrische Lage der Längsbohrung 8 in der blockförmigen Haltevorrichtung 7 für das Meßrohr 3 und die davon ausgehende Nut 9 für den Schutzgaskontaktschalter 5 zu erkennen. Grundsätzlich braucht die Längsbohrung 8 nicht asymmetrisch angeordnet zu sein, jedoch verbessert diese Anordnung die Klammerwirkung des Blockes 7 für das in die Längsbohrung 8 eingeführte Meßrohr 3. Innerhalb des Meßrohres ist der Schwebekörper 4 angeordnet. Der Durchmesser der Längsbohrung 8 ist gleich oder geringfügig kleiner als der Außendurchmesser des Meßrohres 3 ; beispielsweise 1/10-1/13 mm kleiner, um eine gute Klemmwirkung zu erreichen. Mit 10 ist der Längsspalt auf der Vorderseite der Haltevorrichtung 7 bezeichnet.

Bei 10 mm Durchmesser der Längsbohrung 8 hat der Block beispielsweise eine Kantenlänge von etwa 20 mm. An der einen Seite der Längsbohrung 8 ist Wandmaterial für den Längsspalt 10 herausgetrennt. Der Längsspalt 10 kann 1 bis 5 mm breit sein, ist jedoch vorzugsweise enger, jedoch stets so breit, daß der Meßkörper 4 sichtbar bleibt, wenn er in diesen Bereich des Meßrohres 3 gelangt. Auf der dem Längsspalt 10 gegenüberliegenden Wandseite der Längsbohrung 8 ist die Nut 9 zur Aufnahme des Schutzgaskontaktschalters 5 angeordnet. Dieser ist in die Nut 9 eingekittet, und seine Anschlußdrähte sind durch in der Abbildung nicht gezeigte Bohrungen seitlich herausgeführt.

Figur 3 zeigt die gleiche Anordnung im Längsschnitt entlang der Linie III-III von Fig. 2 mit dem durch die Bohrung 8 hindurchgeführten Meßrohr 3. Auf der einen Seite der Bohrung ist der Längsspalt 10 ausgebildet und gegenüberliegend die Nut 9 zur Aufnahme des Schutzgaskontaktschalters 5. In dieser Abbildung sind die im montierten Zustand horizontalen Bohrungen im Block 7 zur Durchführung der Anschlußdrähte des Kontaktschalters 5 wiedergegeben.

Figur 4 zeigt die Haltevorrichtung 7 von vorn im Schnitt entlang der Linie IV-IV von Fig. 2 mit dem in der Nut 9 angeordneten Schutzgaskontaktschalter 5. Oberhalb und unterhalb des Schutzgaskontaktschalters 5 sind die seitlich verlaufenden Bohrungen zur Durchführung der Anschlüsse des Kontaktschalters 5 angeordnet.

In den Figuren 3 und 4 ist der Block 7 als Quader mit einem quadratischen Querschnitt wie in Figur 2 wiedergegeben. Die Quaderlänge kann beispielsweise 25 bis 30 mm betragen bei einer seitlichen Kantenlänge von 20 mm. Der Schutzgaskontaktschalter hat in diesem Falle einen Außendurchmesser von etwa 2 mm, so daß die Nut 9 etwa 2,5 mm breit und tief ausgearbeitet sein muß. Das Einkitten in die Nut erfolgt mittels geeigneter Klebstoffe oder Vergußmassen.

Die Haltevorrichtung kann aber auch dadurch ausgebildet werden, daß der Schutzgaskontaktschalter 5 in ein Gießharz eingebettet wird, wobei die äußere Form des entstehenden Körpers der Haltevorrichtung das Meßrohr 3 zumindest teilweise umfaßt oder außerhalb des Sichtfeldes auf der Frontseite am Meßrohr 3 anliegt.

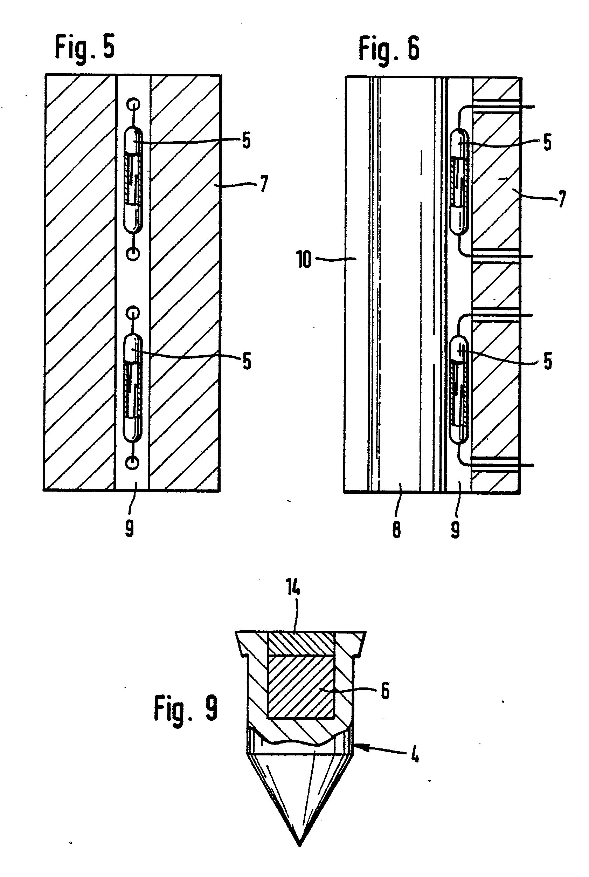

Die Figuren 5 und 6 zeigen die Ausbildung der Haltevorrichtung 7 mit zwei Schutzgaskontaktschaltern 5, um ein bistabiles Schaltverhalten der Vorrichtung zu ermöglichen. Figur 5 ist ein mit Figur 4 vergleichbarer Längsschnitt von vorn, und Figur 6 ist ein mit Figur 3 vergleichbarer Längsschnitt von der Seite.

In Figur 5 ist die Nut 9 zur Aufnahme der beiden Schutzgaskontakte 5 und der auf Stirnseite des Blockes 7 verlaufende Längsspalt 10 wiedergegeben. Die Querbohrungen zur Durchführung der Anschlußdrähte zu den Kontaktschaltern 5 sind wiedergegeben, ihre Durchführung nach hinten ist in Figur 6 deutlich zu erkennen. In dieser Figur ist mit 8 die Längsbohrung bezeichnet, die auf der Stirnseite den Längsspalt 10 und auf der gegenüberliegenden Seite die Nut aufweist.

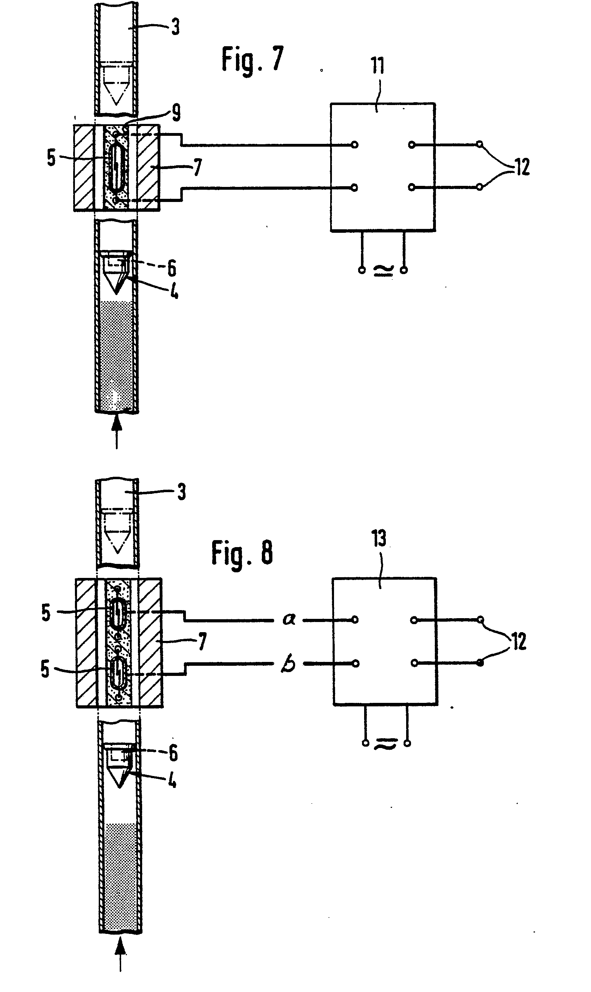

In Figur 7 ist die Anordnung und Schaltung für monostabiles Schaltverhalten der erfindungsgemäßen Meßvorrichtung gezeigt. Das Meßrohr 3 wird von einem Medium von unten nach oben durchströmt und die Strömung hebt den Schwebekörper 4 mit dem darin angeordneten Miniaturmagneten 6 an. Die Haltevorrichtung 7 ist in einer der gewünschten Durchflußmenge entsprechenden Hubhöhe am Meßrohr 3 festgeklemmt. Sobald der Schwebekörper 4 die Höhe des Schutzgaskontaktes 5 erreicht hat, werden dessen Kontakte durch die magnetische Kraft geschlossen und das Kontaktschutzrelais 11 erregt. Dieses Relais betätigt seinerseits den potentialfreien Schaltkontakt 12 als Relaisausgang. An das Kontaktschutzrelais 11 kann eine Gleich- oder Wechselspannung, wie gezeigt, angelegt sein.

Figur 8 zeigt die Ausbildung für bistabiles Schaltverhalten mit zwei Schutzgaskontaktschaltern 5 innerhalb der blockförmigen Haltevorrichtung 7, die über das Meßrohr 3 geschoben ist. Der Schwebekörper 4 befindet sich, durch die Strömung zwar angehoben, noch unterhalb des Schaltpunktes. Er enthält eingekittet einen axial magnetisierten Miniaturmagneten 6. Beide Schutzgaskontakte, sogenannte Reed-Kontakte, sind mit einem elektronischen Schaltglied 13 verbunden. Kontakt a ist mit dem ersten Kontaktschalter und Kontakt b ist mit dem zweiten Kontaktschalter verbunden. Bei Erreichen des ersten Kontaktes wird das elektronische Schaltglied 13 mit einem Steuerimpuls versorgt, der das Schaltglied zurücksetzt oder in die Nullstellung führt. Mit steigender Strömungsgeschwindigkeit erreicht der Meßkörper 4 den zweiten Schutzgaskontakt 5 und löst ein zweites Signal im elektronischen Schaltglied aus. Dieses schaltet den potentialfreien Kontakt 12. Das elektronische Schaltglied ist so ausgebildet, daß dieser Zustand erhalten bleibt, bis durch Betätigung des ersten Kontaktes das elektronische Schaltglied in die Nullstellung zurückgeführt wird. Das elektronische Schaltglied wird aus einer Gleichspannungs- oder Wechselstromquelle mit geeigneter Spannung versorgt. Die Kontakte 12 des Schaltgliedes sind als potentialfreier Schaltkontakt ausgebildet.

Figur 9 zeigt den Schwebekörper 4 im Längsschnitt mit dem eingefügten Magneten 6. Dieser ist in eine entsprechende Bohrung des Schwebekörpers 4 eingefügt und durch einen Verschlußstopfen 14 gesichert. Der Schwebekörper 4 hat einen zylindrischen Querschnitt und ist am unteren Ende kegelförmig verjüngt. Am anderen Ende ist ein erweiterter Außenrand zur Stabilisierung vorgesehen. Bei einer bevorzugten Ausführungsform weist der Schwebekörper einen Durchmesser von 6 mm auf und ist 10 mm lang, wobei der obere Rand 1 mm stark ist und das kegelförmige Stück 5 mm lang.

Der Schwebekörper 4 kann jedoch auch zylindrischen Querschnitt mit jeweils einem erweiterten Außenrand an beiden Enden zur Stabilisierung aufweisen. Derartige Formgestaltungen sind dann bevorzugt, wenn der Magnet nur mit einem Schutzüberzug aus Kunststoff versehen wird.

Der im abgebildeten Falle eingekapselte Magnet hat einen Durchmesser von 3 mm und ist 3 mm lang. Die Magnetisierung der Magnete ist axial, um eine Kraft auf die in montiertem Zustand seitlich liegenden Schutzgaskontakte ausüben zu können.

Bei einer vereinfachten Ausführungsform ist das mit einer Skala versehen Meßrohr nicht in ein besonderes Gestell eingefügt, sondern weist Enden für Leitungsanschlüsse auf, wobei innerhalb des Meßrohres den Querschnitt nur geringfügig verändernde Sperreinsätze für den Schwebekörper an beiden Enden der Meßstrecke vorhanden sind. Die blockförmige Haltevorrichtung wird auf das Meßrohr aufgeschoben. Sie ist längsverschiebbar und umfaßt das Meßrohr wie eine federnde Klammer aufgrund der elastischen Eigenschaften des Kunststoffblocks. Bei der Ausführungsform mit nur teilweiser Umfassung des Meßrohres durch den Halteblock werden das Meßrohr und der Block in geeigneter Weise miteinander verbunden, beispielsweise durch gemeinsame Anordnung innerhalb eines Gehäuses oder Gestelles oder durch Halteklammern. Diese Befestigung fixiert die Stellung des Schutzgaskontaktschalters oder der beiden Schalter am Meßrohr. Grundsätzlich ist auch bei dieser Gestaltung eine längsverschiebbare Ausbildung für den Halteblock möglich.

## Bezugszeichenliste

1 Rohrleitung
2 Gehäuse
3 Meßrohr
4 Schwebekörper, Meßkörper
5 Schutzgaskontaktschalter, Schutzgaskontakt
6 Magnet
7 blockförmige Haltevorrichtung, Block
8 Längsbohrung
9 Nut
10 Längsspalt
11 Kontaktschutzrelais
12 Relaisausgang, potentialfreier Schaltkontakt
13 elektronisches Schaltglied
14 Verschlußstopfen
S Signaleinrichtung/Lampe

6

# 0 101 532

Patentansprüche

1. Vorrichtung zur Durchflußmessung von Gasen oder Flüssigkeiten nach dem Schwebekörperprinzip mit einem in einem engen Meßrohr (3) angeordneten Schwebekörper (4), der einen axial magnetisierten Magneten (6) enthält, und einen seitlich neben dem Meßrohr (3) angeordneten Schutzgaskontaktschalter (5), gekennzeichnet durch folgende Merkmalskombination :

— das Meßrohr (3) weist einen Innendurchmesser von 3 bis 7 mm auf,
— der Schwebekörper (4) weist ein Durchmesser-Längen-Verhältnis von 1 : 1 bis 1 : 3, auf,
— der in dem Schwebekörper (4) enthaltene Magnet (6) weist einen Durchmesser von mindestens 1 mm auf,
— der Magnet (6) hat ein Durchmesser-Längen-Verhältnis von 1 : 1 bis 1 : 2,
— der Schutzgaskontaktschalter (5) ist ein Subminiaturschalter,
— der Schutzgaskontaktschalter (5) hat einen Glasrohr-Durchmesser von 1 bis 3,5 mm, und
— der Schutzgaskontaktschalter (5) hat eine Ansprechempfindlichkeit von 5 bis 60 AW.

2. Vorrichtung nach Anspruch 1, dadurch gekennzeichnet, daß die Meßrohrlänge 30 bis 500 mm, vorzugsweise 30 bis 150 mm, beträgt.

3. Vorrichtung nach Anspruch 1 oder 2, dadurch gekennzeichnet, daß der im Schwebekörper (4) enthaltene Magnet (6) aus einem verformbaren Dauermagnetwerkstoff auf der Basis von Chrom/Kobalt/Eisen- oder Aluminium/Nickel/Kobalt- oder Kobalt/Samarium- oder Kobalt/seltene Erdmetalle enthaltenden/Legierungen besteht.

4. Vorrichtung nach einem der Ansprüche 1 bis 3, dadurch gekennzeichnet, daß der Schutzgaskontaktschalter (5) in einem das Meßrohr (3) mindestens teilweise umfassenden würfel- oder quaderförmigen, eine Längsbohrung (8) zur Aufnahme des Meßrohres (3) aufweisenden Block als Haltevorrichtung (7), und zwar in einer von der Längsbohrung (8) ausgehenden Nut (9) unmittelbar am Meßrohr (3) anliegend, angeordnet ist.

5. Vorrichtung nach Anspruch 4, dadurch gekennzeichnet, daß die Längsbohrung (8) einen Durchmesser aufweist, der gleich oder geringfügig enger ist als der Außendurchmesser des Meßrohres (3), daß das Meßrohr im Block (7) asymmetrisch angeordnet ist und daß das Wandmaterial an der dünnsten Stelle zwischen Längsbohrung (8) und Außenoberfläche des Blockes (7) in Längsrichtung zur Ausbildung eines 1 bis 5 mm breiten Spaltes (10) herausgetrennt ist.

6. Vorrichtung nach Anspruch 4 oder 5, dadurch gekennzeichnet, daß in der Nut (9) zwei Schutzgaskontaktschalter (5) in Längsrichtung hintereinander mit einem Abstand von 1 bis 5 mm angeordnet sind.

7. Vorrichtung nach einem der Ansprüche 1 bis 5, dadurch gekennzeichnet, daß der Schutzgaskontaktschalter (5) über Drahtverbindungen an ein Kontaktschutzrelais (11) angeschlossen ist.

8. Vorrichtung nach Anspruch 6 oder 7, dadurch gekennzeichnet, daß die beiden Schutzgaskontaktschalter (5) über Drahtverbindungen an ein elektronisches Schaltglied (13) angeschlossen sind, das ein bistabiles Schaltverhalten des potentialfreien Schaltkontaktes (12) bewirkt.

## Claims

1. A metering device for the through-flow measurement of gases or liquids according to the float element principle, comprising a float element (4) disposed in a narrow measuring tube (3) with the float element containing an axially magnetized magnet (6) and a protective gas contact switch 5 disposed laterally in side by side relationship with the measuring tube (3), characterized by the following combination of features :

— The measuring tube (3) has an inner diameter of between 3 and 7 mm ;
— the float element (4) has a diameter/length ratio of 1 : 1 to 1 : 3 ;
— the magnet (6) contained in the float element (4) has a diameter of at least 1 mm ;
— the magnet (6) has a diameter/length ratio of 1 : 1 to 1 : 2 ;
— the protective gas contact switch (5) is a subminiature switch ;
— the protective gas contact switch (5) has a glass tube diameter of between 1 and 3.5 mm, and
— the protective gas contact switch (5) has an operating sensitivity of between 5 and 60 ampere turns.

2. A device according to claim 1, characterized in that the measuring tube length is between 30 and 500 mm, preferably between 30 and 150 mm.

3. A device according to any one of claims 1 or 2, characterized in that the magnet (6) contained in the float element (4) is made of a deformable permanent magnet material on the basis of chromium/cobalt/iron alloys or aluminum/nickel/cobalt alloys or cobalt/samarium or cobalt/rare earth metals alloys.

7

4. A device according to any one of claims 1 to 3, characterized in that the protective gas contact switch (5) is disposed in a cube-shaped or parallelepiped-shaped block as the holding mechanism (7) at least partially embracing the measuring tube (3) and including a longitudinal bore (8) for receiving the measuring tube (3), namely in a groove (9) emerging from the longitudinal bore (8) such that the switch is immediately contiguous to the measuring tube (3).

5. A device according to claim 4, characterized in that the longitudinal bore (8) has a diameter identical with or slightly smaller than the outer diameter of the measuring tube (3), that the measuring tube is asymmetrically disposed in the block (7), and that the wall material is removed at the thinnest point between the longitudinal bore (8) and the outer surface of the block (7) longitudinally of the formation of gap (10) having a width of between 1 and 5 mm.

6. A device according to claims 4 or 5, characterized in that two protective gas contact switches (5) are provided in the groove (9) in longitudinal series arrangement at a space of between 1 and 5 mm.

7. A device according to any one of claims 1 to 5, characterized in that the protective gas contact switch (5), through wire connections, is connected to a contact protective relay (11).

8. A device according to claims 6 or 7, characterized in that the two protective gas contact switches (5), through wire connections, are connected to an electronic switching member (13) causing a bistable switching pattern of the potential-free switching contact (12).

**Revendications**

1. Débitmètre pour mesurer le débit des gaz ou des liquides selon le principe d'élément flottant, comportant un élément flottant (4) disposé dans un tube mesureur (3) étroit, l'élément flottant contenant un aimant (6) axialement magnétisé, et comportant un interrupteur de contact à gaz protecteur (5) disposé latéralement à côté du tube mesureur (3), caractérisé par la combinaison de caractéristiques comme suite :

— le tube mesureur (3) comporte un diamètre intérieur de 3 à 7 mm ;
— l'élément flottant (4) comporte un rapport diamètre/longueur de 1 : 1 à 1 : 3 ;
— l'aimant (6) prévu dans l'élément flottant (4) comporte un diamètre d'au moins 1 mm ;
— l'aimant (6) comporte un diamètre/longueur rapport de 1 : 1 à 1 : 2 ;
— l'interrupteur de contact à gaz protecteur (5) est un interrupteur subminiature ;
— l'interrupteur de contact à gaz protecteur (5) comporte un tube de verre diamètre de 1 à 3,5 mm, et
— l'interrupteur de contact à gaz protecteur (5) comporte une sensibilité de réponse de 5 à 60 ampère-tours.

2. Débitmètre selon la revendication 1, caractérisé en ce que la longueur du tube mesureur est 30 à 500 mm, préférablement 30 à 150 mm.

3. Débitmètre selon les revendications 1 ou 2, caractérisé en ce que l'aimant (6) prévu dans l'élément flottant (4) est formé d'une matière d'aimant permanent sur base d'alliage de chrome/cobalt/fer ou d'alliage d'aluminium/nickel/cobalt ou d'alliage de cobalt/terres rares.

4. Débitmètre selon une des revendications 1 à 3, caractérisé en ce que l'interrupteur de contact à gaz protecteur (5) est disposé dans un bloc sous forme cube ou parallélépipède comme dispositif de fixation (7) environnant au moins partiellement le tube mesureur (3) et comportant un alésage longitudinal (8) pour cueillir le tube mesureur (3), notamment dans une rainure (9) émanante de l'alésage (8) immédiatement adjacent au tube mesureur (3).

5. Débitmètre selon la revendication 4, caractérisé en ce que l'alésage longitudinal (8) comporte un diamètre correspondant au diamètre extérieur du tube mesureur (3) ou étant un peu moins de celui-ci, que le tube mesureur est disposé asymétriquement dans le bloc (7) et que le matériel de paroi est enlevé à l'endroit le plus mince entre l'alésage (8) longitudinal et la face extérieure du bloc (7) au sens longitudinal à la formation d'une fente (10) d'une largeur de 1 à 5 mm.

6. Débitmètre selon les revendications 4 ou 5, caractérisé en ce que deux interrupteurs de contact à gaz protecteur (5) sont disposés dans la rainure (9) au sens longitudinal l'un derrière l'autre à distances de 1 à 5 mm.

7. Débitmètre selon une des revendications 1 à 5, caractérisé en ce que l'interrupteur de contact de gaz protecteur (5), par l'intermédiaire des ligatures de fils, est raccordé à un relais protecteur de contact (11).

8. Débitmètre selon les revendications 6 ou 7, caractérisé en ce que les deux interrupteurs de contact à gaz protecteur (5) par l'intermédiaire des ligatures de fils, sont raccordés à un organe de couplage (13) électronique causant une allure de couplage bistabile de l'interrupteur de contact (12) libre de potentiel.

0 101 532

Fig.1

Fig.2

Fig.3

Fig.4

1

# Fig. 5

# Fig. 6

# Fig. 9

Fig. 7

Fig. 8